Europäisches Patentamt

European Patent Office

Office européen des brevets

(11) Numéro de publication: **0 135 448**
**A1**

## (12) DEMANDE DE BREVET EUROPEEN

(21) Numéro de dépôt: **84401837.4**

(22) Date de dépôt: **17.09.84**

(51) Int. Cl.⁴: **G 05 G 17/00**
**D 03 C 1/16, F 16 D 27/10**
**F 16 D 11/10**

(30) Priorité: 19.09.83 FR 8314835
16.01.84 FR 8400710

(43) Date de publication de la demande:
27.03.85 Bulletin 85/13

(84) Etats contractants désignés:
BE CH DE IT LI

(71) Demandeur: SOCIETE ALSACIENNE DE
CONSTRUCTION DE MATERIEL TEXTILE
1, rue de la Fonderie B.P. 1210
F-68054 Mulhouse Cedex(FR)

(72) Inventeur: Vuillet, Jean-Pierre
14 rue de l'Ours
F-68200 Mulhouse(FR)

(74) Mandataire: Loriot, Jacques et al,
c/o SA. FEDIT-LORIOT 38, avenue Hoche
F-75008 Paris(FR)

(54) Dispositif de désaccouplement temporaire de deux organes rotatifs coaxiaux.

(57) L'invention concerne les mécanismes de désaccouplement de deux organes rotatifs.

Le dispositif comporte: un crabot (3) coulissant sur l'organe rotatif moteur (1) et soumis à l'action d'un ressort de rappel (8), un ressort de réserve d'énergie (15) plus fort que le ressort de rappel et propre à dégager le crabot, une came (31) reliée à l'organe moteur (1) et adaptée à bander le ressort de réserve d'énergie, un cliquet (25) capable de maintenir bandé le ressort de réserve d'énergie, et un électroaimant (27) de commande de désaccouplement relié au cliquet pour libérer le ressort de réserve d'énergie.

L'invention est applicable au désaccouplement temporaire de deux organes rotatifs coaxiaux, en particulier, dans les métiers à tisser, pour désaccoupler l'arbre vilebrequin du métier et son moteur principal de l'arbre de la ratière et de son moteur auxiliaire de commande.

FIG_1

EP 0 135 448 A1

1

0135448

Dispositif de désaccouplement temporaire de deux organes rotatifs coaxiaux.

L'invention concerne les dispositifs de désaccouplement temporaire de deux organes rotatifs coaxiaux dont l'un, au moins, est un organe moteur.

On utilise de tels dispositifs de désaccouplement, par exemple, sur des métiers à tisser pour interrompre la liaison entre un premier organe rotatif lié, à la fois, à la ratière du métier et à un moteur auxiliaire d'entraînement de ladite ratière, et un deuxième organe rotatif lié, à la fois, à l'arbre vilebrequin et au moteur principal du métier, de telle façon qu'on ait la possibilité, lorsque les deux organes rotatifs précités sont accouplés, et que seul le moteur principal est alimenté, d'entraîner la ratière, à grande vitesse (par exemple de 300 à 500 tours/minute), à partir du moteur principal du métier par l'intermédiaire des deux organes rotatifs en question, tout l'ensemble du métier étant alors en fonctionnement et, lorsque les deux organes rotatifs sont désaccouplés, d'entraîner la ratière seule à faible vitesse (par exemple à 30 tours/minute) à partir du moteur auxiliaire seul alimenté.

Habituellement, l'accouplement entre les deux organes rotatifs est assuré au moyen d'un crabot coulissant sur l'un desdits organes et soumis, dans le sens de l'accouplement, à l'action d'un ressort de rappel et, dans le sens du désaccouplement, à l'effet d'un électro-aimant. Toutefois, l'électro-aimant doit vaincre, non seulement la force du ressort de rappel mais aussi les diverses forces de frottement dans le dispositif, y compris les forces de frottement qui prennent naissance entre le crabot et l'élément conjugué de l'autre organe rotatif avec lequel il coopère. Il en résulte qu'on est obligé d'avoir recours à un électro-aimant de puissance relativement grande, c'est-à-dire un appareil coûteux, encombrant et consommant beaucoup de courant électrique.

Le but de l'invention est de réaliser un dispositif de désaccouplement qui ne présente pas les inconvénients précités des dispositifs habituels.

A cet effet, suivant l'invention, le dispositif comporte : un ressort de réserve d'énergie capable d'agir sur le crabot coulissant dans le sens de l'exécution du désaccouplement avec une force plus grande que la force du ressort de rappel; une came reliée à l'organe rotatif qui porte le crabot et adaptée à bander ledit ressort de réserve d'énergie; un cliquet propre à maintenir bandé le ressort de réserve d'énergie; et une liaison mécanique entre le cliquet et l'armature mobile de l'électro-aimant, propre à provoquer la libération du ressort de réserve d'énergie en réponse à l'action de l'électro-aimant.

Grâce à cette structure particulière, toute l'énergie nécessaire pour produire le désaccouplement des deux organes rotatifs, c'est-à-dire pour vaincre la force du ressort de rappel et les forces de frottement, est fournie par le ressort de réserve d'énergie et cette énergie est elle-même fournie préalablement audit ressort par la came, c'est-à-dire qu'elle est prélevée sur l'organe rotatif moteur dont la puissance est largement suffisante pour qu'il puisse fournir cet appoint sans inconvénient. Il en résulte que l'électro-aimant n'a à fournir que le seul effort minime nécessaire au dégagement du cliquet de retenue du ressort de réserve d'énergie bandé, de sorte qu'il peut être de dimensions tout à fait modestes et consommer très peu de courant électrique.

L'invention sera mieux comprise à la lecture de la description qui va suivre et à l'examen des dessins annexés qui montrent, à titre d'exemples, divers modes de réalisation de l'invention.

Sur ces dessins :

la figure 1 et la figure 2 représentent schématiquement, respectivement en positions accouplée et désaccouplée, un premier mode de réalisation,

la figure 3 représente en coupe, un deuxième mode de réalisation, et

la figure 4 est une coupe partielle faite suivant la ligne IV-IV de la figure 3,

la figure 5 est une vue en coupe longitudinale d'un manchon coulissant porte-crabot suivant une autre forme de réalisation de l'invention,

la figure 6a est une vue en bout, suivant la flèche B de la figure 5, du même manchon,

la figure 6b est une vue en coupe, suivant le plan C-C de la figure 5, du même manchon,

la figure 7 représente, à plus grande échelle, un détail d'une dent du manchon de la figure 1.

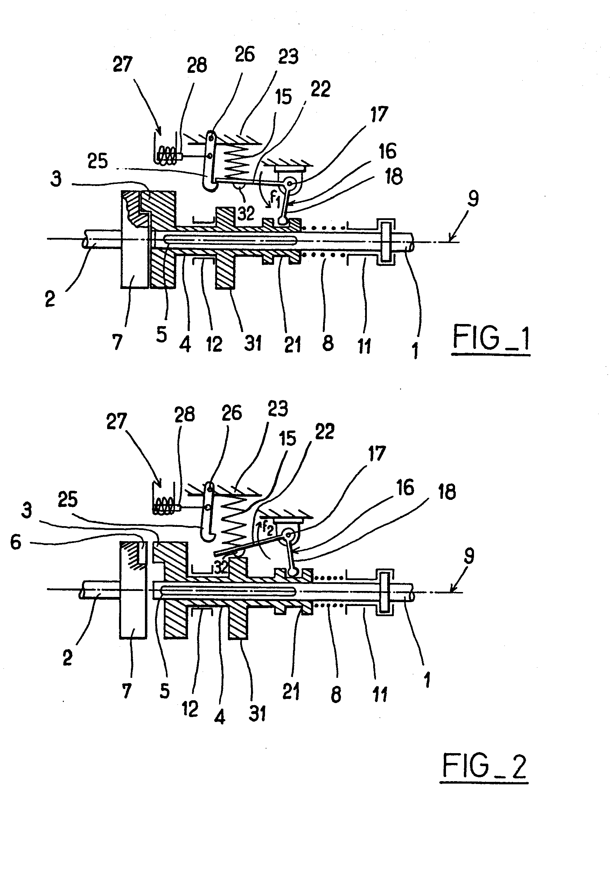

Le dispositif représenté sur les figures 1 et 2 est destiné à permettre le désaccouplement temporaire de deux organes rotatifs coaxiaux dont l'un, 1, est un arbre moteur et l'autre, 2, un arbre mené. L'accouplement de ces deux organes peut être assuré par un crabot 3 solidaire d'une extrémité d'un manchon 4 monté à coulissement sur l'arbre moteur 1 au moyen d'une clavette 5 de manière à être solidaire en rotation dudit arbre. Le crabot 3 peut s'engager dans une mortaise 6 d'un plateau 7 solidaire de l'arbre mené, sous l'action d'un ressort de rappel 8 interposé, sur l'arbre 1, entre un palier 11 de support dudit arbre et l'extrémité du manchon 4 opposée à celle qui porte le crabot 3. Un autre palier de support de l'arbre 1 est indiqué en 12. L'axe commun des deux arbres est désigné par 9.

Un ressort de réserve d'énergie 15 est capable d'agir sur le crabot coulissant 3 dans le sens de l'exécution du désaccouplement des arbres avec une force plus grande que la force de ressort de rappel 11, par l'intermédiaire d'un levier à plusieurs bras 16 qui peut pivoter sur un axe fixe 17; une extrémité d'un bras 18 de ce levier est engagée dans une gorge annulaire 21 du manchon 4, tandis que le ressort de réserve d'énergie 15 s'appuie, par l'une de ses extrémités, contre un autre bras 22 du levier 16 et, par son autre extrémité, contre une butée fixe 23.

Le levier pivotant 16 peut être maintenu dans sa position représentée sur la figure 1, pour laquelle le ressort de réserve d'énergie 15 est bandé, au moyen d'un cliquet 25 qui peut pivoter sur un axe 26 porté par la butée 23 et qui peut s'engager sous l'extrémité du bras 22 du levier pivotant. Un électro-aimant 27 possède une armature mobile 28 reliée au cliquet 25 de façon telle que l'excitation dudit électro-aimant dégage le cliquet de l'extrémité du bras 33.

On peut faire passer le levier pivotant 16 de sa position représentée sur la figure 2 qui correspond à la position de désaccouplement des deux arbres à celle représentée sur la figure 1 qui correspond à la position d'accouplement des arbres, au moyen d'une came 31 solidaire du manchon 4 et située au droit d'un bossage 32 de la branche 22 du levier pivotant, en position désaccouplée des arbres.

Le fonctionnement du dispositif qu'on vient de décrire en référence aux figures 1 et 2 est le suivant :

On suppose que l'arbre moteur 1 et l'arbre mené 2 sont actuellement accouplés, comme représenté sur la figure 1, par le fait que le crabot 3, lié en rotation à l'arbre moteur 1, est maintenu dans la mortaise 6 du plateau 7 de l'arbre mené 2 sous l'action du ressort de rappel 8. Le ressort de réserve d'énergie 15 est maintenu à l'état comprimé par le bras de levier 22, lui-même retenu dans cette position par le cliquet 25. Pendant que les arbres tournent, la came 31 est sans action sur le bras 15, étant donné que celui-ci est maintenu éloigné de la came par le cliquet et que la came n'est pas en regard du bossage 32 du bras de levier 22.

Pour provoquer le désaccouplement des arbres, pour un tour, on envoie une impulsion dans l'électro-aimant 27, l'armature mobile 28 de cet électro-aimant exerce une traction sur le cliquet 25 qui libère donc le bras de levier 22. Le ressort de réserve d'énergie 15 se détend et fait brusquement pivoter le levier à deux bras 16 dans le sens de la flèche f1; le bras 18 de ce levier fait donc coulisser le manchon 4, à l'encontre de la force du ressort de rappel plus faible 8, vers la droite sur le dessin, c'est-à-dire dans le sens qui dégage le crabot 3 de la mortaise du plateau 7 de l'arbre mené 2. Ce dernier n'est plus entraîné par l'arbre moteur 1. Les différents organes du dispositif occupent maintenant les positions représentées sur la figure 2. Mais l'arbre moteur continue à tourner, en entraînant avec lui la came 31; celle-ci repousse le bras de levier 22, ce qui a pour effet de faire pivoter le levier à deux bras 16 dans le sens de la flèche f2 en comprimant le ressort de réserve d'énergie 15 jusqu'à accrocher l'extrémité du bras 22 au cliquet 25, comme représenté sur la figure 1. Le crabot 3, sous l'action du ressort de rappel 8, est sollicité contre la face du plateau 7 de l'arbre mené 2, et, dès que le tour est achevé, il s'enclenche dans la mortaise 6 dudit plateau. Toutes les pièces ont repris leurs positions représentées sur la figure 1 et les deux arbres sont de nouveau accouplés.

On remarquera que l'énergie nécessaire à la compression du ressort 15 est dérivée de l'arbre menant 1 et que l'énergie électrique exigée par l'électro-aimant pour produire le désaccouplement est insignifiante puisque le travail fourni par ce dernier consiste seulement à dégager le cliquet 25 du bras de levier 22. La force du ressort de réserve d'énergie 15 doit être notablement plus grande que celle du ressort de rappel 8, car le ressort 15 doit vaincre, non seulement le ressort 8, mais aussi les forces de frottement du dispositif.

On remarquera aussi que la came 31 est relativement étroite de manière à ne pas se trouver au droit du bossage 32 du bras 22 du levier pivotant lorsque les deux arbres sont accouplés, comme représenté sur la figure 1, ainsi, la bosse de la came 31 ne vient pas heurter inutilement ledit bossage à chaque tour de l'arbre moteur 1, aussi longtemps que les deux arbres demeurent accouplés.

Par ailleurs, dans ce qui précède, on a supposé qu'il n'y avait qu'un seul crabot 3 coopérant avec une seule mortaise 6 et que l'accouplement se reproduisait, par conséquent, au bout d'un tour de l'arbre moteur après l'instant du désaccouplement; la came 31 n'avait donc besoin que d'une seule bosse. Mais on pourrait prévoir des désaccouplements de périodes plus courtes, par exemple pour des durées de un demi-tour ou de un-tiers de tour. Il suffirait, pour cela, que le plateau 7 de l'arbre mené présente deux ou trois mortaises et la came 31 deux ou trois bosses, selon le cas envisagé.

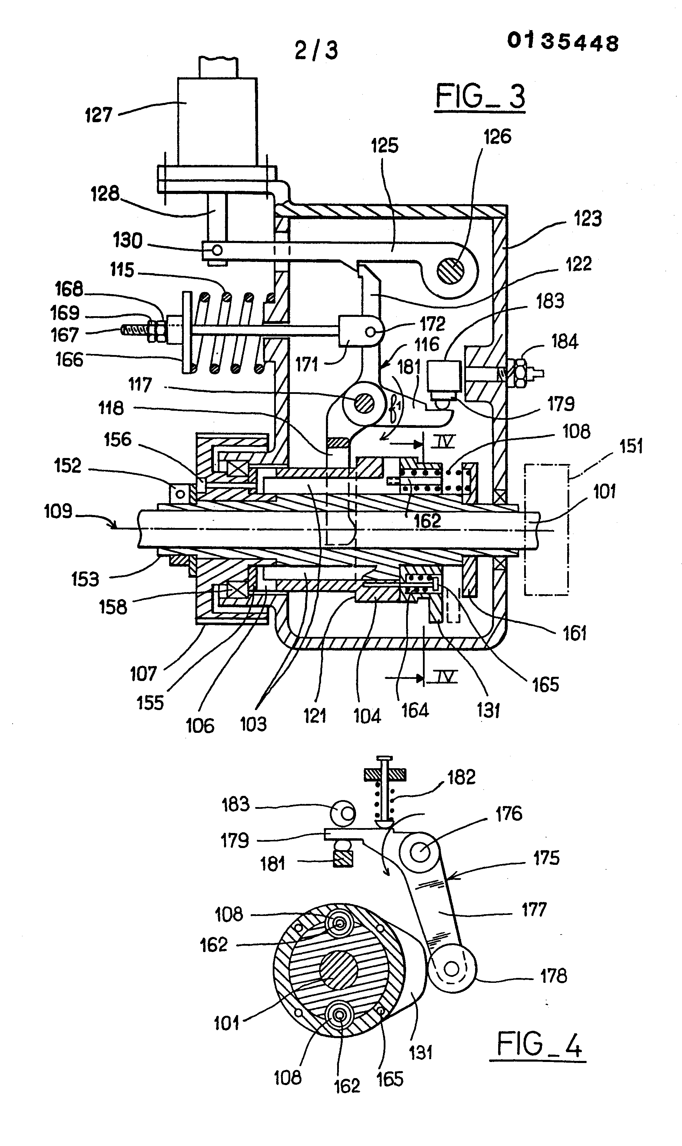

Sur la figure 3, on a représenté un autre mode de réalisation spécialement adapté à l'application indiquée plus haut, c'est-à-dire à la commande de la ratière d'un métier à tisser. Sur cette figure, on a désigné les organes qui correspondent à ceux de la figure 1 par les mêmes chiffres de référence augmentés d'une centaine. Ainsi, le premier organe rotatif 101 est un arbre relié en permanence, à la fois, à un moteur auxiliaire 151 et à la ratière (non représentée) d'un métier à tisser, tandis que le deuxième organe rotatif 107 est une poulie destinée à être reliée en permanence, à la fois, à l'arbre vilebrequin et au moteur principal d'entraînement du métier.

Sur l'arbre 101 est fixée, au moyen d'un collier 152, une douille 153 sur laquelle est monté le manchon coulissant 104 qui présente un épaulement annulaire 121 contre lequel s'appuient les deux extrémités du bras 118 en forme de fourche du levier 116 monté à pivotement dans le bâti 123 du dispositif au moyen de l'axe 117. Dans la douille 153, sont emprisonnées des clavettes à talon 103; une extrémité de chaque clavette peut s'engager dans une mortaise correspondante 106 d'un plateau 155 fixé à la poulie 107 par des vis 156, tandis que son autre extrémité prend appui, par son talon, contre le manchon coulissant 104. La poulie 107 est centrée dans le bâti 123 par un roulement à billes ou à rouleaux 158. Les ressorts de rappel 108 sont interposés entre les talons des clavettes 103 et un disque 161 solidaire de la douille 153; ils sont centrés par des goujons 162 (voir aussi la figure 4) vissés dans les talons des clavettes. La came 131 est retenue élastiquement contre une extrémité du manchon 104 par des ressorts 164 logés dans le moyeu de la came et qui prennent appui sous les têtes de vis 165 montées dans le manchon.

Le ressort de réserve d'énergie 115 prend appui, par l'une de ses extrémités, contre le bâti 123 et, par son autre extrémité, contre un disque 166 retenu sur une extrémité filetée d'une tige 167 par un écrou 168 muni d'un contre-écrou 169. L'autre extrémité de la tige est munie d'une chape 171 articulée, par un axe 172, sur le bras 122 du levier 116. C'est ce bras 122 qui coopère avec le cliquet 125 articulé par l'axe 126 sur le bâti 123 et relié, par un axe 130, à l'armature mobile 128 de l'électro-aimant 127.

Dans ce mode de réalisation, la came 131 n'agit pas directement sur le bras 122 du levier pivotant, mais par l'intermédiaire d'un autre levier coudé 175 (voir notamment figure 4) qui est situé sensiblement dans le plan de la came et qui pivote sur un axe 176 porté par le bâti 123. Ce levier présente un premier bras 177 muni d'un galet 178 de coopération avec la came et un deuxième bras 179 adapté à repousser, dans le sens de la flèche f1 (figure 3), un troisième bras 181 du premier levier pivotant 116 pour assurer la compression du ressort de réserve d'énergie 115. Un ressort 182 maintient le bras 179 du deuxième levier contre le bras 181 du premier, tandis que la course du bras 179 est limitée, vers le haut par une butée réglable 183 qui se présente sous la forme d'un excentrique monté dans un bossage du bâti 123 et dont l'axe se termine par une partie extérieure avec deux méplats aux fins de réglage, tandis qu'on peut bloquer l'excentrique au moyen d'un écrou 184.

Le fonctionnement de ce dispositif représenté sur les figures 3 et 4 est le suivant :

Dans la position où le dispositif est représenté sur le dessin, l'arbre 101 est accouplé à la poulie 107 par les clavettes 103 engagées dans les mortaises 106; le métier est en fonctionnement normal, c'est-à-dire que la poulie 107 tourne, sous l'action du moteur principal du métier, à une vitesse de l'ordre de 300 à 500 tours/minute, de sorte que l'arbre 101, la ratière et le moteur auxiliaire non alimenté tournent à une vitesse correspondante. En cas d'incident dans le tissage, on arrête le moteur principal et, pour produire le désaccouplement des deux organes rotatifs constitués par l'arbre 101 et la poulie 107, on envoie une impulsion électrique dans l'électro-aimant 127, l'armature mobile 128 de ce dernier est attirée et fait pivoter le cliquet 125 vers le haut, le bras 122 du levier pivotant 116 est libéré et, sous l'action du ressort de réserve d'énergie 115, il pivote dans le sens inverse de celui de la flèche f1, le bras fourchu 118 du levier pivotant repousse le manchon coulissant 104 vers la droite à l'encontre de la force des ressorts de rappel 108, les clavettes 103 sont entraînées dans ce mouvement et leurs extrémités sortent des mortaises 106; les deux organes rotatifs en question sont désaccouplés. On peut alors alimenter le moteur auxiliaire 151 pour faire fonctionner la ratière seule aux fins de recherche du pas. Au cours du mouvement de rotation de l'arbre 101, la came 131 repousse le galet 178 (figure 4), ce qui fait pivoter le levier 175 dans le sens de la flèche f2, la branche 179 de ce levier repousse vers le bas la branche 181 (voir aussi figure 3) du levier pivotant 116 qui pivote donc dans le sens de la flèche f1, le ressort de réserve d'énergie 115 se trouve de nouveau comprimé et demeure dans cet état étant donné que le bras 122 du levier pivotant s'est de nouveau accroché au cliquet 125. Sous l'action des ressorts de rappel 108, les clavettes 103 se sont engagées dans les mortaises 106 dès qu'elles se sont présentées devant celles-ci et les deux organes rotatifs sont de nouveau accouplés. On enverra une impulsion dans l'électro-aimant 127 autant de fois qu'on désirera faire encore tourner l'arbre 101 pour actionner la ratière seule, les deux organes précités étant désaccouplés.

On remarquera que, surtout dans cette application, il est particulièrement intéressant que la came 131 ne se trouve au droit du galet 178 que lorsque le dispositif est en condition de désaccouplement, pour réarmer le ressort de réserve d'énergie 115, faute de quoi, en position d'accouplement, la came viendrait heurter ledit galet à chaque tour de l'arbre 101 et cela à grande vitesse, puisque cet arbre tourne, à ce moment-là, entre 300 et 500 tours/minute, ce qui constituerait évidemment un sérieux inconvénient.

Dans le mode de réalisation de la figure 3, le crabot ou organe d'accouplement comprend un manchon coulissant 104 et des clavettes 103 (par exemple 2 ou 4 clavettes) dont une extrémité s'engage dans une mortaise 106 du plateau 155 et dont le talon prend appui contre le manchon coulissant 104.

Cette disposition augmente le nombre des pièces du dispositif, donc son prix; d'autre part, l'effort de dégagement des clavettes peut nécessiter un ressort de désaccouplement relativement fort.

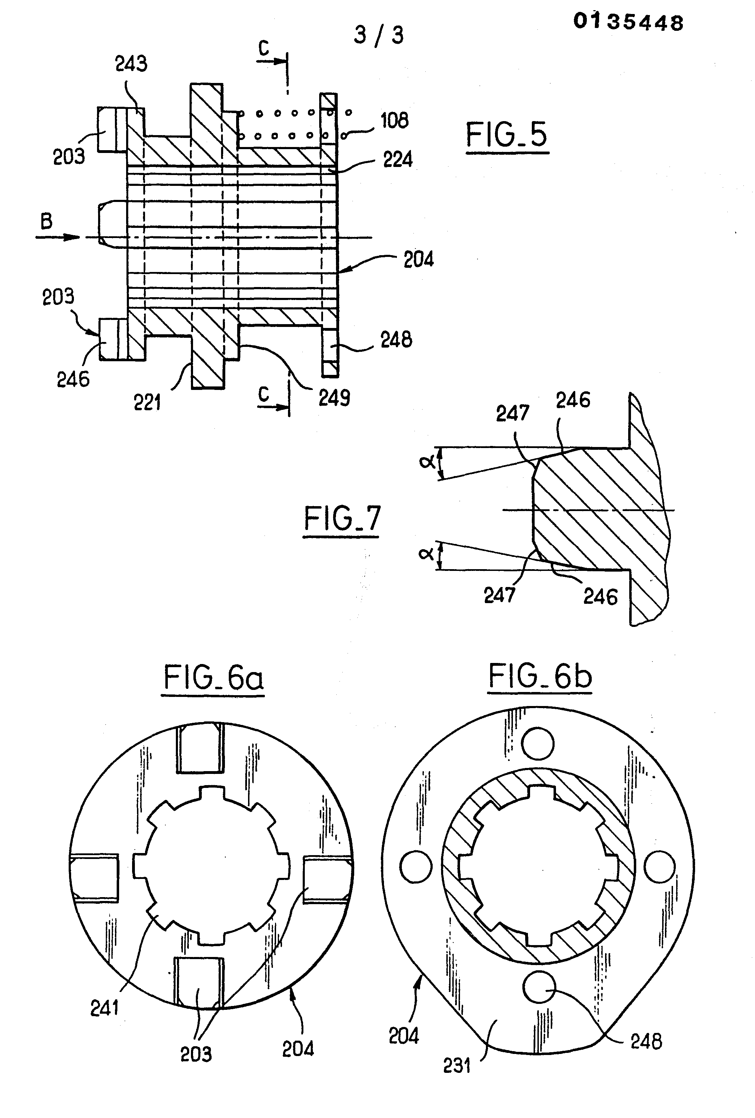

Le mode de réalisation représenté sur les figures 5 à 7 remédie à ces inconvénients grâce au fait que le crabot coulissant est un manchon présentant une pluralité de dents propres à assurer l'engagement dans des mortaises de l'organe mené. Plus particulièrement, les dents sont au nombre de 4 et sont disposées de façon à assurer l'engagement après un tour entier de l'arbre moteur.

Suivant cette disposition, l'ensemble, de la figure 3, composé d'un manchon (104), de clavettes (103), et d'un disque portant une came (131), montés sur une douille (153) est avantageusement remplacé par un manchon cannelé unique (204) représenté aux figures 5, 6a, 6b.

Tous les autres éléments du dispositif de la figure 3 restent fonctionnellement identiques, en particulier le levier-fourche (116) dont deux bras (118) s'appuient sur un épaulement annulaire (221) du manchon (204), dont un autre bras (122) coopère avec un cliquet (125) actionné par un électro-aimant (127) et dont un dernier bras (181) est actionné par la came (231) par l'intermédiaire du levier coudé (175). Pour faciliter la comparaison entre les deux modes de réalisation, les éléments suivant la dernière disposition portent, par rapport à ceux de la figure 3 qui remplissent la même fonction, des numéros de référence augmentés d'une centaine, et les éléments inchangés conservent les mêmes numéros de référence.

Selon cette dernière disposition, le manchon cannelé est rendu solidaire en rotation de l'arbre principal (101) par une pluralité de cannelures (241) mais peut coulisser longitudinalement sur ledit arbre (101).

Le manchon cannelé (204) présente, sur son extrémité devant coopérer avec une poulie (107) une pluralité de dents (203).

A titre d'exemple non limitatif, le manchon (204) présente quatre dents (203) disposées sur un épaulement (243) aptes à coopérer avec quatre mortaises (non représentées) de la poulie (107). Si l'accouplement doit se produire au bout d'un tour entier de l'arbre (101) après l'instant de l'accouplement, les quatre dents (203) seront disposées de la façon indiquée sur la figure 2a. Selon cette disposition particulière non limitative, deux dents opposées sont décalées d'un même côté par rapport au diamètre parallèle à leur axe de symétrie commun, il en est de même pour les deux autres dents.

Afin de faciliter l'engagement des dents au moment de l'accouplement,les dents (203) présentent des chanfreins latéraux (246) représentés en figures 5, 6a et 7, et les coins (247) sont coupés.

L'angle ($\alpha$) des chanfreins (246), mesuré comme l'indique la figure 7, ne doit pas être cependant trop important.pour éviter la sortie des dents à grande vitesse malgré la présence des ressorts de retenue (108).

A titre indicatif, pour un couple de 30 m/kg sur la ratière et un effort axial total de 50 à 60 kg environ dû aux ressorts, on évalue l'angle ($\alpha$) à 11° et les chanfreins s'étendent sur une partie au moins des faces latérales des dents, par exemple la moitié.

D'autre part,une came (231) est solidaire en translation et en rotation, du manchon (204).

Ladite came (231) est disposée à l'extrémité opposée à celle qui porte l'épaulement (243) et les dents (203), sa fonction est identique à celle de la came (131) du dispositif de la figure 3.

Une pluralité de logements (248) est prévue pour le guidage des ressorts de rappel (108) dont une extrémité s'appuie sur un épaulement annulaire (249) du manchon cylindrique.

Bien entendu, sans sortir du cadre de la présente invention, on peut choisir pour ce manchon, des variantes d'exécution fonctionnellement identiques ou on peut utiliser le manchon décrit ci-dessus avec le type de levier du premier mode de réalisation décrit à propos des figures 1 et 2.

0135448

## REVENDICATIONS

1. Dispositif de désaccouplement temporaire de deux organes rotatifs coaxiaux dont l'un au moins est un organe moteur, au moyen d'un crabot coulissant sur l'organe moteur et soumis, dans le sens de l'accouplement, à l'action d'un ressort de rappel et, dans le sens du désaccouplement, à l'effet d'un électro-aimant, caractérisé en ce qu'il comporte :

a. un ressort de réserve d'énergie (15, 115) capable d'agir sur le crabot coulissant (3, 103) dans le sens de l'exécution du désaccouplement avec une force plus grande que la force du ressort de rappel (8, 108),

b. une came (31, 131) reliée à l'organe moteur (1, 101) et adaptée à bander ledit ressort de réserve d'énergie (15, 115),

c. un cliquet (25, 125) propre à maintenir bandé le ressort de réserve d'énergie (15, 115),

d. et une liaison mécanique (130) entre le cliquet (25, 125) et l'armature mobile (28, 128) de l'électro-aimant (27, 127) propre à provoquer la libération du ressort de réserve d'énergie (15, 115) en réponse à l'action de l'électro-aimant.

2. Dispositif suivant la revendication 1, caractérisé en ce que le ressort de réserve d'énergie (15, 115) est relié à un levier (16, 116) qui peut

pivoter sur un axe (17, 117) orthogonal à l'axe (9, 109) des organes rotatifs précités (1, 2, 101, 107) et qui présente plusieurs bras dont l'un (18, 118) est relié au crabot coulissant (3, 103), tandis qu'un autre (22, 122) coopère avec le cliquet (25, 125), la came (31, 131) coopérant avec ledit levier.

3. Dispositif suivant la revendication 2, caractérisé en ce que la coopération de la came (131) avec le levier pivotant (116) se fait par l'intermédiaire d'un levier auxiliaire (175) qui peut pivoter sur un axe (176) parallèle à l'axe (109) des organes rotatifs précités (101, 107) et qui coopère avec un troisième bras (181) du levier pivotant précité (116).

4. Dispositif suivant la revendication 1, caractérisé en ce que la came (31, 131) est solidaire en rotation du crabot coulissant (3,103).

5. Dispositif suivant la revendication 4, caractérisé en ce que la came (31, 131) est solidaire du crabot coulissant (3, 103) également en translation et n'est en position de coopération avec le levier pivotant (16 ou 175) que lorsque le dispositif est en condition de désaccouplement.

6. Dispositif suivant l'une quelconque des revendications 1 à 5, caractérisé en ce que le crabot coulissant est un manchon (204) présentant une pluralité de dents (203) propres à assurer l'engagement dans des mortaises de l'organe mené (7 - 107).

7. Dispositif selon la revendication 6, caractérisé en ce que le crabot coulissant comporte quatre dents.

8. Dispositif selon l'une des revendications 6 ou 7, caractérisé en ce que les dents (203) sont disposées de façon à réaliser l'engagement après un tour entier de l'arbre moteur (101).

9. Dispositif selon l'une quelconque des re- vendications 6 à 8, caractérisé en ce que les dents comportent des chanfreins latéraux (246).

10. Dispositif selon la revendication 9, caractérisé en ce que l'angle (α) des chanfreins latéraux vaut 11°.

11. Application du dispositif suivant l'une quelconque des revendications 1 à 10 à des métiers à tisser, dans laquelle l'organe rotatif moteur (101) est un arbre relié à la ratière et au moteur auxiliaire (151) qui la commande, tandis que l'autre organe rotatif (107) est relié à l'arbre vilebrequin du métier et au moteur principal qui le commande.

FIG_1

FIG_2

2/3

0135448

FIG_3

FIG_4

FIG_5

FIG_7

FIG_6a

FIG_6b

Office européen
des brevets

**RAPPORT DE RECHERCHE EUROPEENNE**

0135448

Numéro de la demande

EP 84 40 1837

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 205 590 (ELITEX) <br> * figure 2; page 3, ligne 31 - page 4, ligne 12; page 6, lignes 8-32 * <br><br> --- | 1 | G 05 G 17/00 <br> D 03 C 1/16 <br> F 16 D 27/10 <br> F 16 D 11/10 |
| A | GB-A- 139 761 (H.B. KRAUT) <br> * page 2, lignes 32-56; revendication 1 * <br><br> --- | 1 | |
| A | DE-C- 594 360 (C. HECKING) <br><br> ----- | | |

**DOMAINES TECHNIQUES RECHERCHES (Int. Cl.4)**

G 05 G
D 03 C
F 16 D

Le présent rapport de recherche a été établi pour toutes les revendications

| Lieu de la recherche | Date d'achèvement de la recherche | Examinateur |
|---|---|---|
| LA HAYE | 31-10-1984 | HARRISON M.C. |